# EUROPEAN PATENT SPECIFICATION

(11) **EP 1 614 601 B1**
(45) Date of publication and mention of the grant of the patent: **02.11.2006**
(21) Application number: 04019079.5
(22) Date of filing: 11.08.2004
(51) Int. Cl.: B60T 17/02

(54) **Vacuum pump for vehicle**
Fahrzeugvakuumpumpe
Pompe de vide d'un véhicule

(30) Priority: 06.07.2004 KR 2004005220
(43) Date of publication of application: 11.01.2006
(73) Proprietor: Valeo Mando Electrical Systems Korea Limited, Kyongju-si, Kyongsangbuk-do (KR)
(72) Inventor: Lee, Hyun-Cheol, Dong-gu, Daegu-si, 701-120 (KR); Park, Soon-Sik, Kyongju-si, Kyongsangbuk-do, 780-140 (KR); Ahn, Hyung-Cheul, Kyongju-si, Kyongsangbuk-do, 780-130 (KR)
(74) Representative: Urner, Peter

(56) References cited:
- DE-A1- 3 528 139
- DE-A1- 19 608 344
- FR-A- 573 060
- GB-A- 410 753
- GB-A- 2 075 121
- US-A- 643 432
- US-A- 5 022 842
- US-A1- 2003 072 668

## Description

### BACKGROUND OF THE INVENTION

### 1. Field of the Invention

The present invention relates to a vacuum pump for a vehicle, and in particular to a vacuum pump for a vehicle capable of preventing a vibration noise by vanes in such a manner that any interference is prevented between vanes and a cam part that have a bad sliding operation due to an inertial force and oil viscosity when an engine of a vehicle stops by improving the construction of a cam part of a housing plate with a pump rotor inserted therein.

### 2. Description of the Background Art

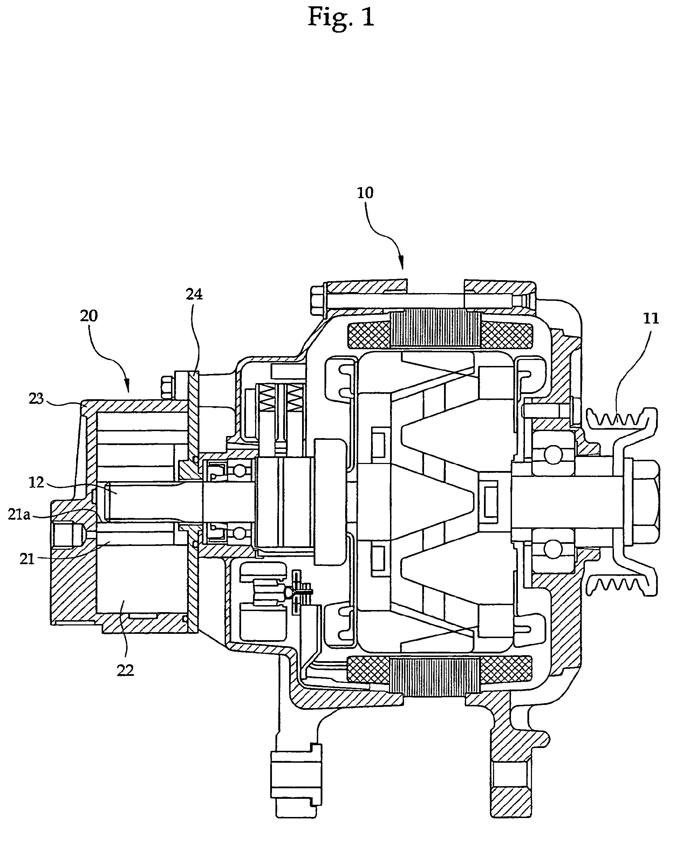

Generally, a vacuum suction force is used for multiple purposes. The vacuum suction force is generated by driving a vacuum pump that is directly connected with a driving shaft of an engine or connected with an alternator. Figure 1 is a view illustrating the construction of a vacuum pump 20 additionally installed in a vehicle alternator 10. US 2003/072668 A1 shows a pump design according to the preamble of present independent claim 1.

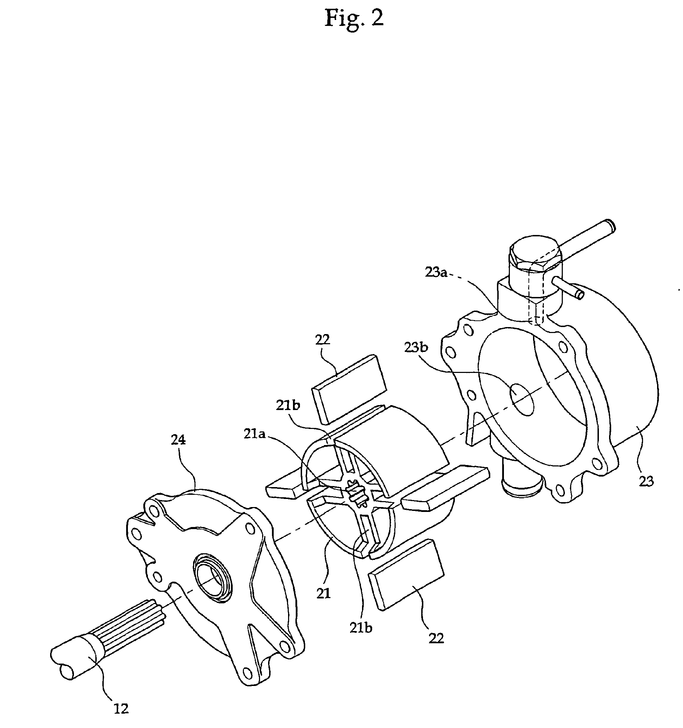

As shown in Figures 1 and 2, a pump rotor 21 is engaged with a shaft 12 of an alternator 10 that received a driving force from an engine through a pulley 11. The vanes 22 are assembled to the pump rotor 21. The vanes 22 are rotated in the pump housing 23 for thereby generating a vacuum suction force.

As the revolution of the vacuum pump 20 is increased, a friction between the pump rotor 21, the vanes 22 and the pump housing 23 is increased. Here, the friction causes heat as well as wears out the contacting portions for thereby decreasing the durability of the pump.

Therefore, lubricant is provided into a sliding portion between the vanes 22 and the pump rotor 21 in order to decrease heat generated by friction.

In addition, the lubricant is forcibly applied based on the operation of an oil pump (not shown) that is electronically operated. However, when the vehicle is stopped, the following problems occur.

Namely, since the oil pump is electronically operated based on the power, it is stopped at the time when the vehicle is key off. However, the vacuum pump is continuously operated by a rotation inertia force applied to a crank shaft of the engine after the key off, and then is stopped when the rotation inertia force is weakened. In a state that the supply of the lubricant is stopped, when the vacuum pump is operated in the drain mode, the degree of the friction between the vanes and the other parts (housing, plate, pump rotor, etc.) is temporarily increased. Therefore, when the pump rotor is rotated at a low speed, the air is reverse-flown from an exhaust part for thereby generating impacts and vibrations in the vanes.

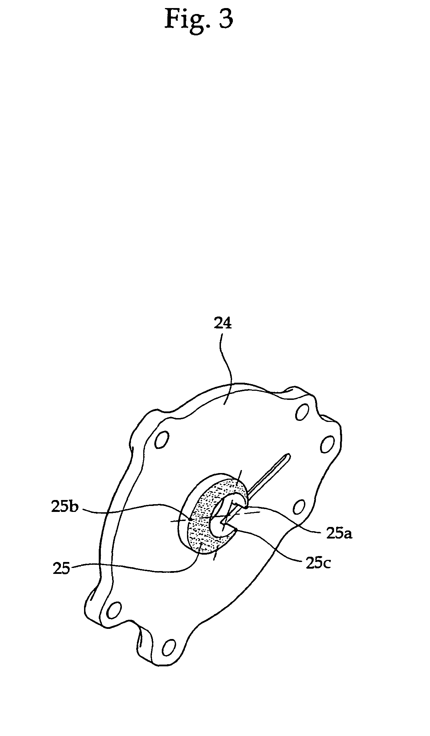

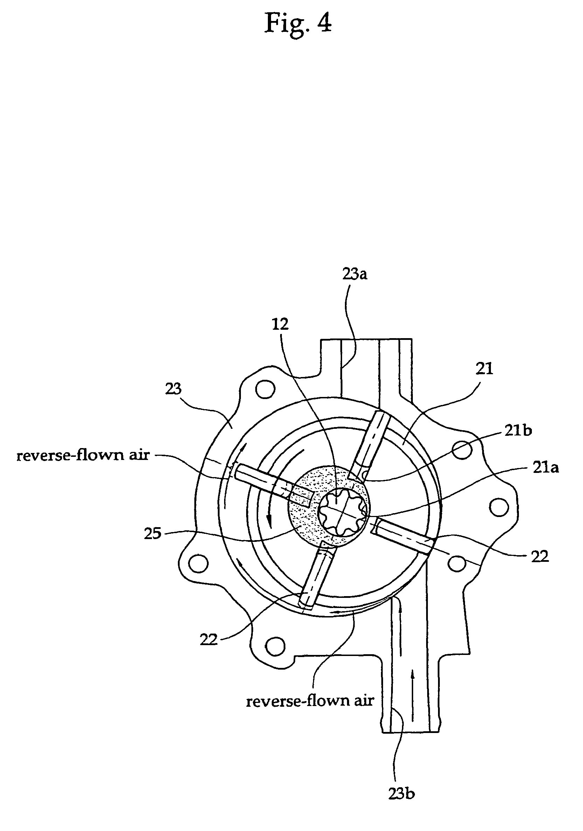

When a very slow rotation is performed after the key off or key on, the centrifugal force is decreased, and the viscosity of the lubricant is increased. At that moment a cam part 25 is needed as shown in Figure 3. The cam part 25 pushes up the lower part of the vane 22 by the rotating of the pump rotor 21 during the early stage of the rotation of the pump rotor 21 when the centrifugal force is weak and the viscosity of the lubricant is high. But, though there is the cam part 25, the cam part 25 cannot perfectly push up the ends of the vane 22 to the inner surface of the pump housing 23. Therefore, as shown in Figure 4, there is a gap between the ends of the vane 22 and the inner surface of the pump housing 23. In this case, the gap allows the air to flow reversely from the exhaust part 23b.

When the air is reverse-flown, a force pressing an upper side of the vane is generated in the interior of the housing that remains a vacuum state. Therefore, the vanes 22 cause collision or interference with the cam part 25 by the above force for thereby generating vibration noise.

### SUMMARY OF THE INVENTION

Accordingly, it is an object of the present invention to overcome the problems encountered in the conventional art.

It is another object of the present invention to provide a vacuum pump for a vehicle capable of preventing noise even when vanes are pressed in vane grooves in such a manner that an eccentric cam part is formed in a center of a housing plate, and the eccentric cam part is concaved not to contact with the vanes in a portion after a top dead point (TDP).

To achieve the above objects, in a vacuum pump that includes a shaft that receives a rotational force, a pump rotor that has a shaft hole into which an end of the shaft is inserted, a plurality of vanes assembled into the vane grooves of the pump rotor, a pump housing that has the inner surface which is contacted with by the ends of the vanes, and a housing plate that hermetically blocks one side surface of the pump housing, and a cam part for the vanes is formed in an inner surface of the housing plate so that the vanes appear when the pump rotor is rotated in an inserted state, and the cam part has a cylindrical outer circumferential surface between a cam start point and a cam top dead point (TDP), there is provided a vacuum pump for a vehicle that is characterized in that a concave part is provided between the cam top dead point and the cam end point, so that the inner ends of the vanes do not contact when the vanes are rotated.

The concave part includes a circular concave part in which the radius of the cam part is gradually decreased, and a step shaped concave part in which a part of the cam part is cut and sharply decreased.

### BRIEF DESCRIPTION OF THE DRAWINGS

The present invention will become better understood with reference to the accompanying drawings which are given only by way of illustration and thus are not limitative of the present invention, wherein;
Figure 1 is a cross sectional view illustrating an alternator having a vacuum pump for a vehicle;
Figure 2 is a disassembled perspective view illustrating a vacuum pump of Figure 1;
Figure 3 is a view illustrating the construction of a housing plate of a conventional vacuum pump;
Figure 4 is a view for describing an operation of a cam part of a housing plate of a conventional vacuum pump;
Figure 5 is a view illustrating the construction of a housing plate of a vacuum pump according to the present invention;
Figure 6 is a view for describing an operation of a cam part of a housing plate according to the present invention; and
Figure 7 is a view illustrating the construction of a housing plate according to another embodiment of the present invention.

### DETAILED DESCRIPTION OF THE PREFERRED EMBODIMENTS

The construction and operation of the present invention will be described with reference to the accompanying drawings.

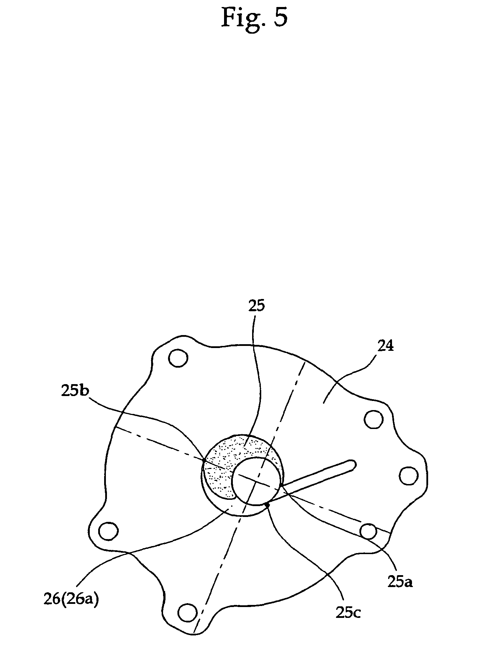

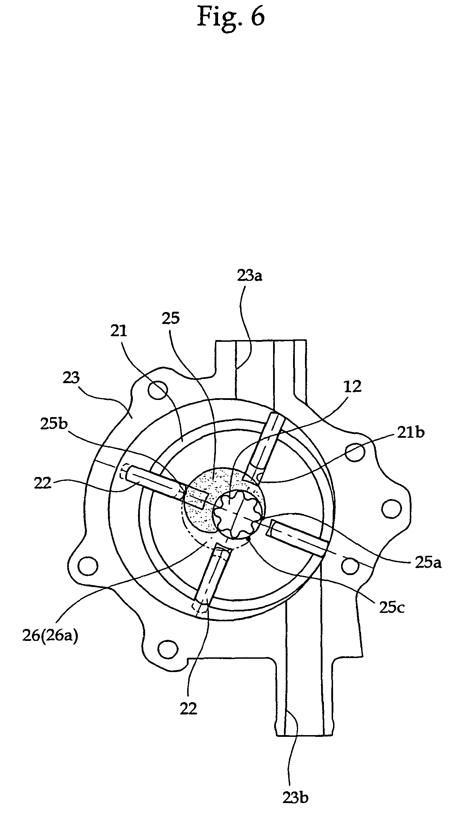

Figure 5 is a view illustrating the construction of a housing plate of a vacuum pump according to the present invention, and Figure 6 is a view for describing an operation of a cam part of a housing plate according to the present invention.

The vacuum pump according to the present invention is designed in a rotary vane type and includes a shaft 12 that receives a rotational force, a pump rotor 21 that has a shaft hole 21 a into which an end of the shaft 12 inserted, a plurality of vanes 22 that are assembled to the vane grooves 21 b of the pump rotor 21, a pump housing 23 that has the inner surface which is contacted with by the ends of the vanes 22, and a housing plate 24 that hermetically blocks one side surface of the pump housing.

In particular, as shown in Figure 1, the shaft 12 has a concentric axis with the shaft of an alternator 10 that receives a driving force from an engine (not shown).

In the present invention, the construction of the cam part 25 of the housing plate 24 is improved, and a concave part 26 is provided in a section between the cam end points 25c in the top dead point 25b of the cam.

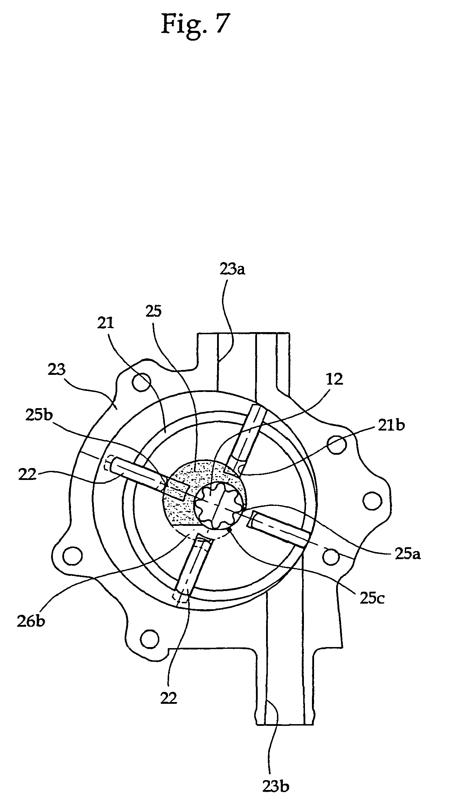

As shown in Figure 5, the concave part 26 may be formed of a circular concave part 26a formed in such a manner that the radius part of the cam part is gradually decreased. As shown in Figure 7, it may be formed of a step shaped concave part 26b formed in such a manner that a part of the cam part is cut and is sharply decreased.

As shown in Figure 6, when the pump rotary 21 is rotated by the shaft 12, the vanes 22 inserted into the vane grooves 21 b of the pump rotor 21 appear from the vane grooves 21 b for thereby discharging the inner air.

When the vanes 22 inserted in the vane grooves 21 b of the pump rotor 21 are rotated in a state that they are inserted into the bottom of the housing by a centrifugal force, the air is sucked from the suction part 23a provided at one side of the pump housing 23 and is discharged through the exhaust part 23b provided in the other side of the pump housing 23.

Therefore, a vacuum suction force is generated in a sealed space connected with the suction part 23a, so that the vacuum suction force is used for a braking means for a vehicle.

At this time, the cam part 25 of the housing plate 24 helps the vanes 22 not to appear when the viscosity of the lubricant is high at the time when the engine starts.

Namely, the lower ends of the vanes 22 are pushed up and protruded to the outside in the cam start point 25a of the cam part 25, and the vanes are inserted into the vane grooves 21 b after the top dead point 25b of the cam part 25. In the present invention, the cam part 25 is formed of the concave part 26, so that the inner ends of the vanes 22 do not contact with the surface of the cam part 25 until the end point 25c of the cam.

Therefore, even when the viscosity of the lubricant is high at the time when the engine first starts for thereby preventing a smooth sliding of the vanes, and the air reversed from the exhaust part 23b affects the vanes 22, since the inner ends of the vanes 22 do not contact with the cam part 25, it is possible to prevent vibration noises.

The operations of the circular shape concave part 26a of Figure 5 and the step shaped concave part 26b of Figure 7 are same except for the following operations. Namely, in the circular concave part 26a, the returning operation of the vanes 22 appearing and disappearing is more smoothly performed, and in the step shaped concave part 26b, the manufacturing process is easier as compared to the circular concave part 26a.

As described above, in the present invention, it is possible to prevent vibration noises even when the air is reverse-flown from the exhaust part and affects vanes or generates vibrations in such a manner that the construction of the cam part of the housing plate is improved, so that the inner ends of the vanes do not contact.

As the present invention may be embodied in several forms without departing from the spirit or essential characteristics thereof, it should also be understood that the above-described examples are not limited by any of the details of the foregoing description, unless otherwise specified, but rather should be construed broadly within its scope as defined in the appended claims, and therefore all changes and modifications that fall within the meets and bounds of the claims, or equivalences of such meets and bounds are therefore intended to be embraced by the appended claims.

## Claims

1. A vacuum pump for vehicle including a shaft (12) which receives a rotational force, a pump rotor (21) having a shaft hole (21a) into which an end of the shaft (12) is inserted, a plurality of vanes (22) assembled into the vane grooves (21b) of the pump rotor (21), a pump housing (23) which is rotated in such a manner that the ends of the vanes (22) contact with the inner surface, a housing plate(24)which hermetically blocks one side surface of the pump housing (23), a cam part (25) which has a cylindrical outer circumferential surface between a cam start point (25a) and a cam top dead point (TDP) (25b) and is formed in an inner surface of the housing plate (24) so that the vanes (22) appear when the pump rotor (21) is rotated in an inserted state, **characterized in that** a concave part (26) is provided between the cam top dead point (25b) and the cam end point (25c) so that the inner ends of the vanes do not contact when the vanes (22) are rotated.

2. The pump of claim 1, wherein said cam part (25) includes a concave part (26) with a circular concave part (26a) in such a manner that the radius of the cam part is gradually decreased.

3. The pump of claim 1, wherein said cam part (25) includes a concave part (26) with a step shaped concave part (26b) in such a manner that a part of the cam part is cut and sharply decreased.

## Patentansprüche

1. Vakuumpumpe für Fahrzeug, mit einer Welle (12), die eine Drehkraft aufnimmt, einem Pumpenrotor (21), der ein Wellenloch (21 a) besitzt, in das ein Ende der Welle (12) eingeschoben ist, mehreren Schaufeln (22), die in die Schaufelnuten (21b) des Pumpenrotors (21) eingesetzt sind, einem Pumpengehäuse (23), das in der Weise gedreht wird, dass die Enden der Schaufeln (22) mit der inneren Oberfläche in Kontakt sind, einer Gehäuseplatte (24), die eine seitliche Oberfläche des Pumpengehäuses (23) hermetisch blockiert, und einem Nockenabschnitt (25), der eine zylindrische äußere Umfangsoberfläche zwischen einem Nockenstartpunkt (25a) und einem oberen Nockentotpunkt (TDT) (25b) besitzt und an einer inneren Oberfläche der Gehäuseplatte (24) ausgebildet ist, so dass die Schaufeln (22) vortreten, wenn der Pumpenrotor (21) in einem eingesetzten Zustand gedreht wird, **dadurch gekennzeichnet, dass** ein konkaver Abschnitt (26) zwischen dem oberen Nockentotpunkt (25b) und dem Nockenendpunkt (25c) vorgesehen ist, so dass die inneren Enden der Schaufeln nicht in Kontakt sind, wenn die Schaufeln (22) gedreht werden.

2. Pumpe nach Anspruch 1, bei der der Nockenabschnitt (25) einen konkaven Abschnitt (26) mit einem kreisförmigen konkaven Abschnitt (26a) aufweist, derart, dass der Radius des Nockenabschnitts allmählich abnimmt.

3. Pumpe nach Anspruch 1, bei der der Nockenabschnitt (25) einen konkaven Abschnitt (26) mit einem stufenförmigen konkaven Abschnitt (26b) aufweist, derart, dass ein Teil des Nockenabschnitts abgeschnitten ist und plötzlich kleiner wird.

## Revendications

1. Une pompe à vide pour un véhicule, comprenant un arbre (12) qui reçoit une force de rotation, un rotor de pompe (21) ayant un trou d'arbre (21a) dans lequel est insérée une extrémité de l'arbre (12), une pluralité d'aubes (22) assemblées dans les rainures d'aubes (21b) du rotor de pompe (21), un boîtier de pompe (23) qui est tourné de telle sorte que les extrémités des aubes (22) sont en contact avec la surface intérieure, une plaque de boîtier (24) qui bloque de manière hermétique une surface latérale du boîtier de pompe (23), une pièce de came (25) qui a une surface de circonférence extérieure cylindrique entre un point initial de came (25a) et un point mort haut de came (PMH) (25b), et qui est formée dans une surface intérieure de la plaque de boîtier (24), de sorte que les aubes (22) apparaissent lorsque le rotor de pompe (21) tourne dans un état d'insertion, **caractérisée en ce que** la partie concave (26) est prévue entre le point mort haut (25b) de la came et le point limite (25c) de la came, de sorte que les extrémités intérieures des aubes ne sont pas en contact lorsque les aubes (22) tournent.

2. La pompe selon la revendication 1, dans laquelle ladite pièce de came (25) comprend une partie concave (26) avec une partie concave circulaire (26a), de telle sorte que le rayon de la pièce de came diminue progressivement.

3. La pompe selon la revendication 1, dans laquelle ladite pièce de came (25) comprend une partie concave (26) avec une partie concave de forme étagée (26b), de telle sorte qu'une partie de la pièce de came est découpée et diminue brusquement.
